**Europäisches Patentamt**

(19) **European Patent Office**

**Office européen des brevets**

(11) Veröffentlichungsnummer: **0 138 140**

**B1**

(12) # EUROPÄISCHE PATENTSCHRIFT

(45) Veröffentlichungstag der Patentschrift:
**16.12.87**

(21) Anmeldenummer: **84111737.7**

(22) Anmeldetag: **02.10.84**

(51) Int. Cl.⁴: **C 08 L 27/12,** C 08 L 15/00 //
(C08L27/12, 15:00),
(C08L15/00, 27:12)

(54) Polymermischungen und daraus hergestellte Covulkanisate.

(30) Priorität: **14.10.83 DE 3337397**

(43) Veröffentlichungstag der Anmeldung:
**24.04.85 Patentblatt 85/17**

(45) Bekanntmachung des Hinweises auf die Patenterteilung:
**16.12.87 Patentblatt 87/51**

(84) Benannte Vertragsstaaten:
**DE FR GB IT**

(56) Entgegenhaltungen:
**DE-A-3 141 573**

**PATENTS ABSTRACTS OF JAPAN, Band 6, Nr.
231(C-135)(1109), 17. November 1982**

(73) Patentinhaber: **BAYER AG, Konzernverwaltung RP
Patentabteilung, D-5090 Leverkusen 1 Bayerwerk
(DE)**

(72) Erfinder: **Buding, Hartmuth, Dr.,
Liebermannstrasse 1, D-4047 Dormagen 1 (DE)**
Erfinder: **Szentiványi, Zsolt, Dr., Carl- Rumpff-
Strasse 9, D-5090 Leverkusen 1 (DE)**
Erfinder: **Thörmer, Joachim, Dr., Emil- Nolde-
Strasse 39, D-5090 Leverkusen 1 (DE)**

## Beschreibung

Die Erfindung betrifft vulkanisierbare Polymermischungen aus Fluorelastomeren und weitgehend gesättigten, nitrilgruppenhaltigen Elastomeren und die daraus durch peroxidische Vernetzung hergestellten Covulkanisate.

Fluorelastomere sind hochwertige Kautschuke, die wärmestandfest, beständig gegen Chemikalien, Dampf und heißes Wasser sind und insbesondere nur eine geringe Quellung in Kohlenwasserstoffen zeigen. Sie werden durch Polymerisation oder Copolymerisation hochfluorierter oder perfluorierter Monomerer erhalten und können mit Hilfe von Peroxiden vernetzt werden. Die Festigkeit der daraus erhaltenen Vulkanisate ist durchschnittlich.

Fluorelastomere sind beispielsweise in den deutschen Offenlegungsschriften 16 45 010, 17 95 819 und 28 36 296 und in den europäischen Offenlegungsschriften 77 998, 48 308 und 99 079 beschrieben.

Weitgehend gesättigte, nitrilgruppenhaltige Elastomere werden beispielsweise durch Hydrieren von Nitrilkautschuken (Butadien-Acrylnitril-Copolymerisaten) erhalten. Ihre Vulkanisate zeichnen sich durch hohe Festigkeit aus.

Solche Elastomere sind beispielsweise aus der US-PS 3 700 637 und den Deutschen Offenlegungsschriften 25 39 132 und 29 13 992 bekannt.

Es wurde nun überraschend gefunden, daß sich aus Fluorelastomeren und weitgehend gesättigten, nitrilgruppenhaltigen Elastomeren Mischungen herstellen lassen, die peroxidisch oder durch Bestrahlung zu Covulkanisaten mit überragenden Eigenschaften vernetzt werden können.

Gegenstand der Erfindung sind daher Mischungen aus (a) 95 bis 5 Gew.-%, vorzugsweise 70 bis 10 Gew.-% Fluorelastomeren und (b) 5 bis 95 Gew.-%, vorzugsweise 30 bis 90 Gew.-% nitrilgruppenhaltigen Elastomeren mit 25 bis 140 Nitrilstickstoffatomen auf 1000 Kohlenstoffatome und weniger als 35 Doppelbindungen, vorzugsweise weniger als 12 Doppelbindungen und insbesondere weniger als 2 Doppelbindungen auf 1000 Kohlenstoffatome, sowie (c) üblichen Mischungsbestandteilen, wobei sich die Prozentangaben auf die Summe aus (a) und (b) beziehen.

Ein weiterer Gegenstand der Erfindung sind Covulkanisate, die durch peroxidische Vernetzung oder Strahlenvernetzung aus den vorstehend genannten Mischungen erhalten werden.

Die Fluorelastomere enthalten als Monomere beispielsweise Tetrafluorethylen, Vinylidenfluorid, Tetrafluorpropen, Pentafluorpropen, Hexafluorpropen und perfluormethylperfluorvinylether sowie gegebenenfalls auch nichtfluorierte Monomere wie Ethylen und Propen oder geringe Mengen bromierter oder iodierter Olefine. Die Fluorgehalte betragen 50 bis 71 Gew.-%, die Molgewichte $M_w$ 10 000 bis 10 000 000.

Bei der Herstellung der weitgehend gesättigten, nitrilgruppenhaltigen Elastomeren geht man vorzugsweise von Nitrilkautschuken aus 10 bis 48 Gew.-% (Meth)acrylnitril, 50 bis 85 Gew.-% eines konjugierten Diens mit 4 bis 9 C-Atomen und 0 bis 30 Gew.-% eines dritten Monomers, beispielsweise (Meth)acrylsäure, (Meth)acrylsäurealkylester oder Vinylacetat aus, die z. B. gemäß DE-OS 25 39 132 hydriert werden.

Vorzugsweise bestehen die Nitrilkautschuke aus 48 bis 15 Gew.-% Acrylnitril und 52 bis 85 Gew.-% Butadien oder Isopren.

Übliche Mischungsbestandteile einer Kautschukmischung sind dem Fachmann bekannt; es handelt sich beispielsweise um Füllstoffe, Weichmacher, Alterungschutzmittel Verarbeitungshilfsmittel, Pigmente, Säureakzeptoren und Vulkanisationschemikalien, wobei für die Vulkanisation der erfindungsgemäßen Kautschukmischung Peroxide verwendet werden.

Geeignete Peroxide sind z. B. Dialkylperoxide, Ketalperoxide, Aralkylperoxide, Peroxiether, Peroxiester. Bevorzugt werden Di-tert.-butylperoxid, Bis-(tert.butylperoxiisopropyl-benzol), Dicumylperoxid, 2,5-Dimethyl-2,5-di(tert.-butylperoxi)-hexan, 2,5-Dimethyl-2,5-di-(tert.-butylperoxi)-hexen-(3), 1,1-Bis(tert.-butylperoxi)-3,3,5-trimethylcyclohexan, Benzoylperoxid, tert.-Butylcumylperoxid oder tert.-Butylperbenzoat verwendet.

Die Peroxidmengen betragen 1 bis 15 Gew.-%, vorzugsweise 2 bis 4 Gew.-%, bezogen auf Kautschukfeststoff.

Als Strahlenquellen für die Strahlenvernetzung eignen sich die Erzeuger energiereicher elektromagnetischer Strahlen, wie Röntgenstrahlen und γ-Strahlen sowie die Erzeuger von Elektronenstrahlen.

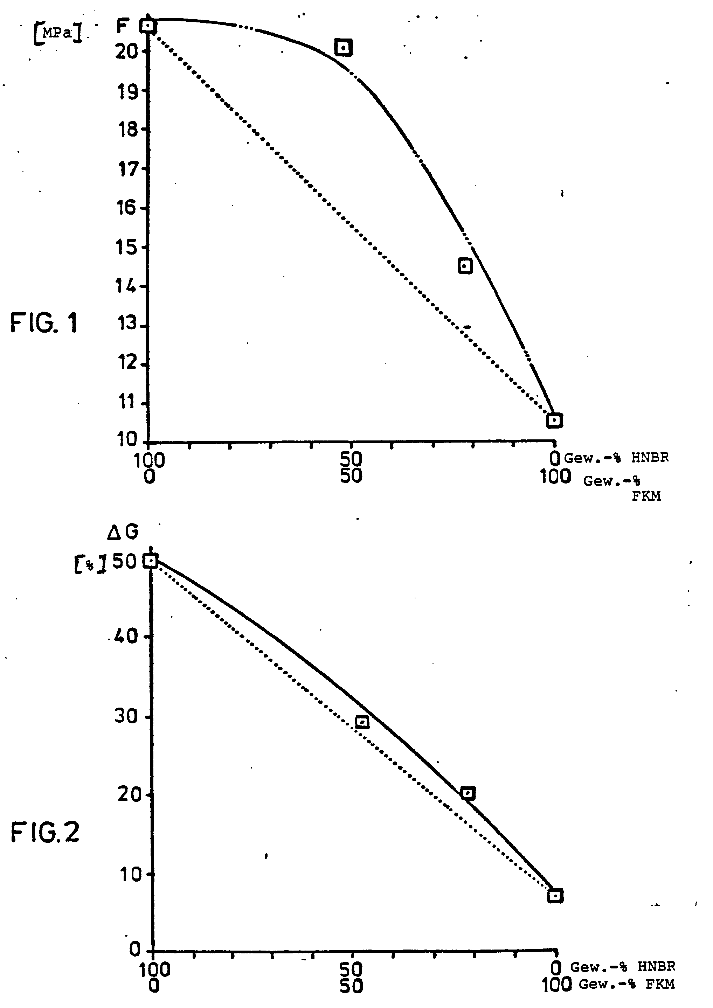

Die Covulkanisate zeigen überraschenderweise bei den Festigkeiten überadditive Werte, siehe Fig. 1. Sie zeigen zudem eine sehr geringe Quellung in flüssigen Kohlenwasserstoffen (s. Fig. 2) und ein hervorragendes Eigenschaftsniveau in den weiteren wesentlichen Kautschukeigenschaften. Sie eignen sich daher zur Herstellung von Dichtungen und anderen Gummiartikeln, insbesondere in für Anwendungsbereiche, in denen extreme Forderungen an Festigkeit, Weiterreißfestigkeit, Quellbeständigkeit, Entformbarkeit gestellt werden, wie bei der Herstellung und Verwendung von Gummiartikeln für die Erdölexploration und -förderung, insbesondere im off-shore-Bereich.

Fig. 1 zeigt die Abhängigkeit der Festigkeit F von der Zusammensetzung des Covulkanisats. Fig. 2 zeigt die Abhängigkeit der Quellung ΔG von der Zusammensetzung des Covulkanisats.

In Fig. 1 wird die Festigkeit F / MPa / gegen die Zusammensetzung aufgetragen, wobei die Werte für Gew.-% Polymer, bezogen auf Gesamtpolymer, ermittelt wurden. Der Gehalt an Fluorelastomer steigt von links (0 Gew.-%) nach rechts (100 Gew.-%) kontinuierlich an; der Gehalt an weitgehend gesättigten, nitrilgruppenhaltigen Elastomeren nimmt entssprechend ab. Die gepunktete Linie gibt den erwarteten Verlauf aus den bekannten Festigkeiten der reinen Elastomeren, bezogen auf die jeweilige Mischung wieder.

In Fig. 2 wird die Quellung ΔG in % in Kraftstoff 3 bei Raumtemperatur nach 7 Tagen in entsprechender Weise gegen die Zusammensetzung aufgetragen.
Die für Fig. 1 und 2 geprüften Elastomere sind die des Beispiels 1.

**Beispiel**

Die folgenden Basismischungen I und II wurden in einem 1,3 l Laborkneter bei 60°C mit 36 Upm und 8 bar (8 · $10^5$ Pa) Stempeldruck hergestellt.

**Michung I**

| | | |
|---|---|---|
| HNBR* | 100 | Gew.-Teile |
| Ruß 550 | 20 | '' |
| Ruß 765 | 40 | '' |
| Magnesiumoxid | 8 | '' |
| Calziumoxid | 3 | '' |
| Distyryldiphenylamin | 1 | '' |
| Nickeldibutyldithiocarbamat | 1 | '' |
| Triallylcyanurat (80 Gew.-%) | 1,5 | '' |
| Bis-(tert.-butylperoxiisopropyl-benzol (40 Gew-%) | 5,0 | '' |

**Mischung II**

| | | |
|---|---|---|
| FKM** | 100 | Gew.Teile |
| pyrogene Kieselsäure (130m²/g nach BET) | 20 | '' |
| Calziumoxid | 3 | '' |
| Triallylcyanurat (80 Gew.-%) | 1,3 | '' |
| Bis-(tert.-butylperoxiisopropylbenzol) (40 Gew.-%) | 1,5 | '' |

\* Hydriertes Acrylnitril-Butadien-Copolymerisat mit einem Acrylnitrilgehalt von 34 Gew.-%, einem Hydrierungsgrad von 99 % und einer Mooney-Viskosität ML 100°C (1+4) von 75

\*\* Fluorkautschuk mit einem Fluorgehalt von 64 Gew.-% einem spez. Gewicht von 1,81 g/cm³ und einer Mooney-Viskosität ML 121°C (1+10) von 60

Mit den Basismischungen I und II wurden Verschnitte auf einer Laborwalze (Ø 150 mm/ 24 Upm, 1,2-Friktion) bei 40°C hergestellt, bei 170°C 20 Minuten vulkanisiert und 5 Stunden bei 175°C getempert (Normstab 3 a).
Die Ergebnisse der Vulkanisate und Covulkanisate sind in der nachfolgenden Tabelle dargestellt.

| | | | | |
|---|---|---|---|---|
| Mischung I (Gew.-Tle) | 100 | 60 | 30 | - |
| Mischung II (Gew.-Tle) | - | 40 | 70 | 100 |
| Gew.-%, HNBR, bezogen auf Gesamtkautschuk | 100 | 51,2 | 23,1 | 0 |
| Gew.-% FKM, bezogen auf Gesamtkautschuk | 0 | 48,8 | 76,9 | 100 |
| F [MPa] | 20,6 | 19,8 | 14,4 | 10,5 |
| D [%] | 380 | 290 | 360 | 390 |
| $M_{50}$ [MPa] | 3,0 | 3,5 | 2,7 | 2,5 |
| $M_{100}$ [MPa] | 5,2 | 5,6 | 4,1 | 3,2 |
| $H_{RT}$ [Shore A] | 75 | 77 | 74 | 72 |
| ΔG Kraftstoff 3; RT, 7 Tage [%] | 50 | 30 | 19 | 7 |
| Tor max [°C] | -13 | -8 | -6 | -3 |

**Patentansprüche**

1. Mischungen aus (a) 95 bis 5 Gew.-% eines Fluorelastomeren mit einem Fluorgehalt von 50 bis 71 Gew.-% und Molekulargewichten $M_W$ 10.000 bis 10 000 000 und (b) 5 bis 95 Gew.-% eines nitrilgruppenhaltigen Elastomeren mit 25 bis 140 Nitrilstickstoffatomen und weniger als 35 Doppelbindungen auf 1000 Kohlenstoffatome sowie (c) üblichen Mischungsbestandteilen, wobei sich die Prozentangaben auf die Summe aus (a) und (b) beziehen.

2. Mischungen nach Anspruch 1 aus 70 bis 10 Gew.-% (a) und 30 bis 90 Gew.-% (b).

3. Mischungen nach Anspruch 1, wobei (b) weniger als 12 Doppelbindungen auf 1000 Kohlenstoffatome enthält.

4. Mischungen nach Anspruch 1, wobei (b) weniger als 2 Doppelbindungen auf 1000 Kohlenstoffatome enthält.

0 138 140

5. Covulkanisate aus den Mischungen nach Anspruch 1, erhalten durch peroxidische Vernetzung oder durch Strahlenvernetzung.

**Claims**

1. Mixtures of (a) 95 to 5 % by weight of a fluoroelastomer with a fluorine content of 50 to 71 % by weight and molecular weights $M_W$ of 10,000 to 10,000,000 and (b) 5 to 95 % by weight of a nitrile-group-containing elastomer with 25 to 140 nitrilenitrogen atoms and fewer that 35 double bonds per 1000 carbon atoms and (c) customary mixture ingredients, the percentages relating to the sum of (a) and (b).

2. Mixtures according to Claim 1 of 70 to 10 % by weight of (a) and 30 to 90% by weight of (b).

3. Mixtures according to Claim 1, in which (b) contains fewer that 12 double bonds per 1000 carbon atoms.

4. Mixtures according to Claim 1, in which (b) contains fewer than 2 double bonds per 1000 carbon atoms.

5. Covulcanisates obtained from the mixtures according to Claim 1 by peroxidic cross-linking or by radiation cross-linking.

**Revendications**

1. Mélanges de (a) 95 à 5 % en poids d'un élastomère fluoré à une teneur en fluor de 50 à 71 % en poids, avec des poids moléculaires $M_W$ de 10 000 à 10 000 000 et (b) 5 à 95 % en poids d'un élastomère comprenant des groupes nitrile à raison de 25 à 140 atomes d'azote de nitrile et moins de 35 doubles liaisons pour 1 000 atomes de carbone, et (c) des constituants usuels de mélange, les indications de pourcentages se rapportant à la somme de (a) et (b).

2. Mélanges selon la revendication 1, consistant en 70 à 10 % en poids de (a) et 30 à 90 % en poids de (b).

3. Mélanges selon la revendication 1, dans lesquels le composant (b) contient moins de 12 doubles liaisons pour 1 000 atomes de carbone.

4. Mélanges selon la revendication 7, dans lesquels le composant (b) contient moins de 2 doubles liaisons pour 1 000 atomes de carbone.

5. Co-vulcanisats des mélanges selon la revendication 1, obtenus par réticulation sous l'action de peroxydes ou sous l'action de radiations.

FIG. 1

FIG.2